(19) Europäisches Patentamt
European Patent Office
Office européen des brevets

(11) **EP 2 716 352 A1**

(12) **EUROPEAN PATENT APPLICATION**
published in accordance with Art. 153(4) EPC

(43) Date of publication:
**09.04.2014 Bulletin 2014/15**

(51) Int Cl.:
**B01F 3/04** (2006.01)      **B01F 5/22** (2006.01)
**B01F 7/26** (2006.01)      **B01J 10/02** (2006.01)

(21) Application number: **11866490.3**

(22) Date of filing: **27.05.2011**

(86) International application number:
**PCT/JP2011/062297**

(87) International publication number:
**WO 2012/164652 (06.12.2012 Gazette 2012/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **M. Technique Co., Ltd.**
**Izumi-shi**
**Osaka**
**594-1144 (JP)**

(72) Inventor: **ENOMURA Masakazu**
**Izumi-shi**
**Osaka 594-1144 (JP)**

(74) Representative: **Robertson, James Alexander**
**Marks & Clerk LLP**
**90 Long Acre**
**London**
**WC2E 9RA (GB)**

(54) **MICROBUBBLE-GENERATING DEVICE, MICROBUBBLE-GENERATING METHOD, AND GAS-LIQUID REACTION METHOD USING SAME**

(57)    The present invention addresses the problem of: providing an apparatus and method for generating fine bubbles in a plurality of processing surfaces in a plurality of processing members disposed in opposition so as to be capable of being brought together and moved apart, at least one being capable of relative rotation with respect to the other; as well as providing a method for reacting fine bubbles using a method for generating fine bubbles. Provided are: a plurality of processing members (10, 20) disposed in opposition so as to be capable of being brought together and moved apart, at least one being capable of relative rotation with respect to the other; processing surfaces (1, 2) provided in mutually opposed positions in the respective processing members (10, 20); and at least two independent flow path (d1, d2) communicating with the space between the processing surfaces (1, 2). A gas and a liquid representing a fluid to be processed are introduced into the space between the processing surfaces (1, 2) from the at least two independent flow path (d1, d2), and the fluid is processed. The liquid is introduced from one flow path (d1) of at least two independent flow path (d1, d2), and the gas is introduced through the other flow path (d2), whereby bubbles are generated between the processing surfaces (1, 2).

Figure 1

**Description**

Technical Field

The present invention relates to: an apparatus for generating fine bubbles between processing surfaces in processing members capable of approaching to and separating from each other, at least one of which rotates relative to the other; and a method for generating the fine bubbles. In addition, the present invention relates to a method for a gas-liquid reaction characterized in that the gas-liquid reaction is executed by contacting the fine bubbles generated between the processing surfaces with a reactant.

Background Art

In recent years, fine bubbles such as microbubbles and nanobubbles are receiving an attention as they are used in a wide range of fields including an environmental field, an industrial field, a health field, and a medical field, and thus, are used for culture fishery, waste-water treatment, soil remediation, reduction of fluid resistance in the ship bottom, sanitation, contrast agent, and so on.
There are apparatus generally used for generating fine bubbles as mentioned above, apparatus such as a swivel method shown in Patent Document 1, a pressurization- evacuation method shown in Patent Document 2, a spray nozzle method, and the like. However, these apparatuses have many problems, such as for example, that there is a tendency that the apparatuses become large-scale, and that, not only they tend to require a high cost for making bubbles smaller by dividing the bubbles but also a large energy is necessary. On the other hand, in the case that fine bubbles are generated by using a microreactor shown in Patent Document 3, problems with regard to the clogging of the flow path by bubbles as well as to the mass production of bubbles have not been solved yet.
In the fluid processing apparatus and the fluid processing method provided in Patent Documents 4 and 5 by the present applicant to execute mixing, reaction, crystallization, and so on between processing surfaces in processing members capable of approaching to and separating from each other, at least one of which rotates relative to the other, a tiny reaction field could be formed easily, and in addition, fluid processing with a low energy and a low resource became possible.
However, even in the fluid processing apparatus shown in Patent Documents 4 and 5, there has been no specific description how to generate fine bubbles between the processing surfaces; and therefore, a method for generating fine bubbles with a low energy and a method for efficiently utilizing the generated fine bubbles have been eagerly wanted.

PRIOR ART DOCUMENTS

PATENT DOCUMENT

Patent Document 1: Japanese Patent Laid-Open Publication No. 2006-142300
Patent Document 2: Japanese Patent Laid-Open Publication No. 2011-78858
Patent Document 3: Japanese Patent Laid-Open Publication No. 2009-101299
Patent Document 4: Japanese Patent Laid-Open Publication No. 2004-49957
Patent Document 5: International Patent Laid-Open Publication No. W02009/ 8394

Disclosure of Invention

Problems to be solved by the Invention

The present invention has an object to provide an apparatus for generating fine bubbles and a method for generating fine bubbles by applying a fluid processing apparatus to process a substance to be processed between a plurality of processing surfaces in a plurality of processing members which are disposed in a position they are faced with each other so as to be able to approach to and separate from each other, at least one of which rotates relative to the other. Furthermore, because the generated fine bubbles have a large interfacial area, an object thereof is to provide a method for an efficient gas-liquid reaction by effectively contacting the generated fine bubbles with a reactant between the processing surfaces.

Means for Solving the Problems

In order to solve the problems mentioned above, the invention according to the first claim of the present application provides an apparatus for generating fine bubbles, characterized in that the apparatus is provided with a plurality of processing members which are disposed in a position they are faced with each other so as to be able to approach to and separate from each other, at least one of which rotates relative to the other, a plurality of processing surfaces which are disposed in a position they are faced each other in the respective plurality of processing members, and at least two independent flow paths leading to the said plurality of processing surfaces, whereby introducing a fluid to be processed into the plurality of processing surfaces through the at least two independent flow paths to carry out fluid processing, characterized in that of the at least two independent flow paths, introducing a liquid which is one fluid to be processed through one flow path, while introducing a gas which is another fluid to be processed through another flow path, whereby generating bubbles between the plurality of processing surfaces.

The invention according to the second claim of the present application provides a method for generating fine bubbles, characterized in that fine bubbles are generated by mixing a liquid and a gas as fluids to be processed in a plurality of processing members which are disposed in a position they are faced with each other so as to be able to approach to and separate from each other , at least one of which rotates relative to the other, and in between a plurality of processing surfaces which are disposed in a position they are faced with each other in the each of the plurality of processing members; characterized in that, any one of the liquid and the gas passes through between the plurality of processing surfaces while forming a thin film fluid, an another introduction path independent of the flow path for the any one of the liquid and the gas is provided, at least any one of the plurality of processing surfaces is arranged with one opening which leads to this introduction path, any other one of the liquid and the gas is introduced between the processing surfaces through the opening, whereby mixing the liquid with the gas in the thin film fluid to generate fine bubbles.

The invention according to the third claim of the present application provides a method for gas-liquid reaction, characterized in that the method for generating fine bubbles according to the second claim is used, characterized in that at least one reactant is contained in at least any one of the fluids to be processed, i.e., in at least any one of the liquid, the gas, and one fluid to be processed other than the said liquid and the said gas, characterized in that the fluids to be processed are mixed in the thin fluid thereby reacting the gas with the reactant.

The invention according to the fourth claim provides a method for a gas-liquid reaction, characterized by using the method for generating fine bubbles according to the second claim, the fine bubbles generated in the thin film fluid formed between the plurality of processing surfaces is contacted in the processing surfaces with a reactant contained in at least any one of the fluids to be processed, i.e., in at least any one of the liquid, the gas, and one fluid to be processed other than the said liquid and the said gas, these being introduced into between the plurality of the processing surfaces to generate the fine bubbles, whereby reacting the fine gas bubbles with the reactant.

Advantages

According to the present invention, provided are an apparatus for generating fine bubbles between a plurality of processing surfaces in a plurality of processing members which are disposed in a position they are faced with each other so as to be able to approach to and separate from each other, at least one of which rotates relative to the other; and a method for generating fine bubbles. According to the present invention, fine bubbles can be generated more easily as compared with a conventional method. In addition, a gas-liquid reaction can be executed more efficiently than ever because the generated fine bubbles can be contacted with a reactant efficiently and effectively.

[FIG. 1]

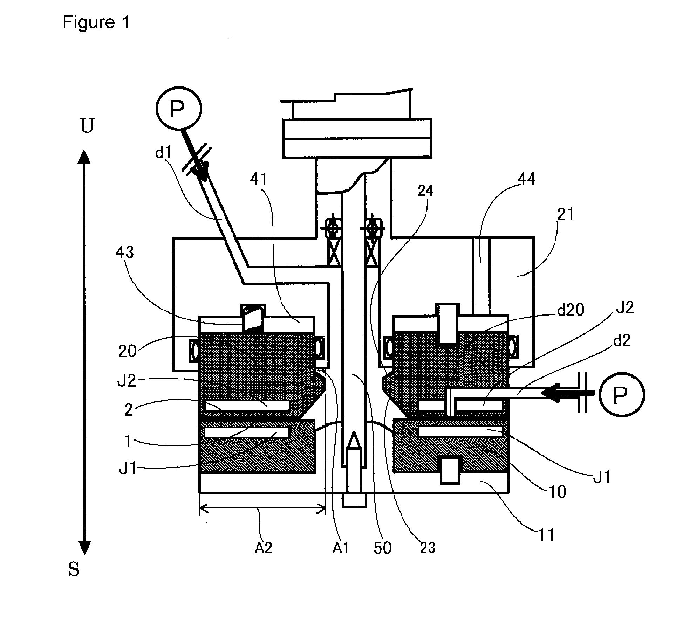

FIG. 1 is a schematic sectional view showing the fine bubble-generating apparatus according to an embodiment of the present invention.

[FIG. 2]

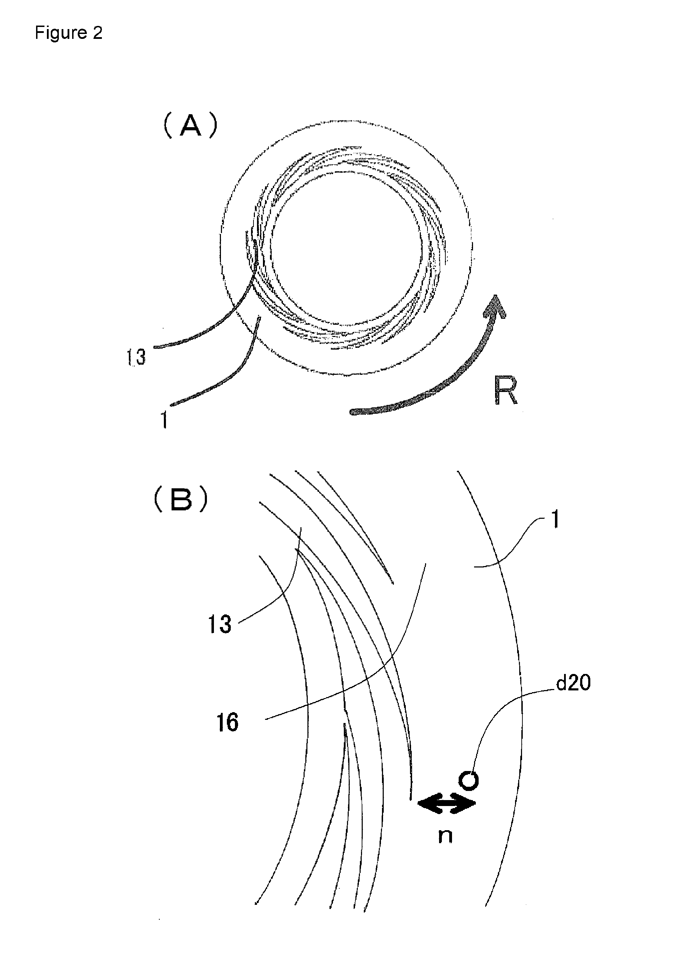

FIG. 2(A) is a schematic plane view of the first processing surface in the fine bubble-generating apparatus shown in FIG. 1, and FIG. 2(B) is an enlarged view showing an important part of the processing surface in the apparatus.

[FIG. 3]

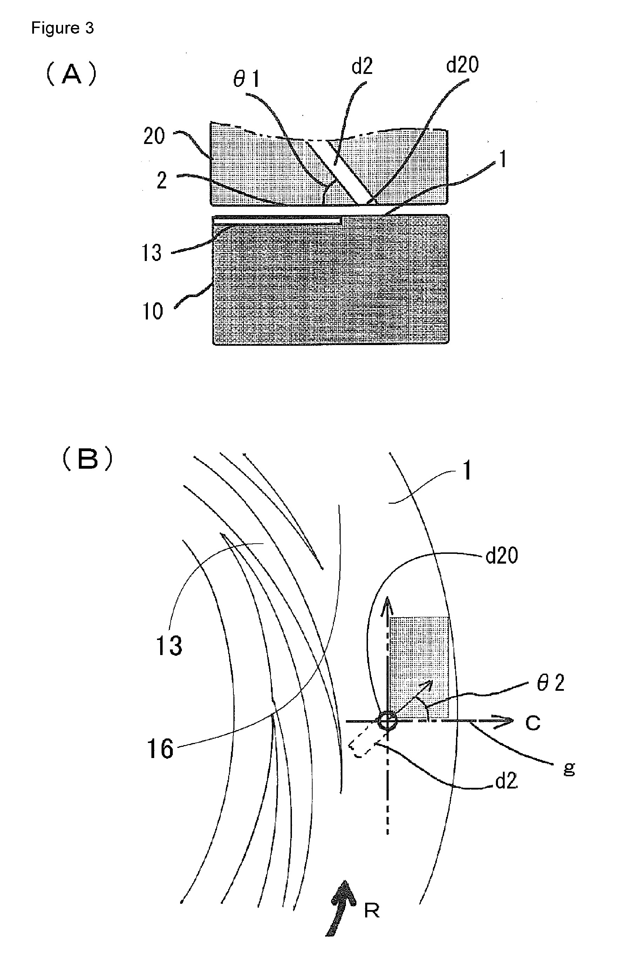

FIG. 3(A) is a sectional view of the second introduction member of the apparatus, and FIG. 3(B) is an enlarged view showing an important part of the processing surface for explaining the second introduction member.

Best Modes for Carrying Out the Invention

Hereinafter, an embodiment of the apparatus for generating fine bubbles as mentioned above will be explained by using the drawings.

The fluid processing apparatus shown in FIG. 1 to FIG. 3 is similar to the apparatus described in Patent Document 5, with which a material to be processed is processed between processing surfaces in processing members arranged so as to be able to approach to and separate from each other, at least one of which rotates relative to the other; characterized in that, of the fluids to be processed, a first fluid to be processed, i.e., a first fluid, is introduced into between the processing surfaces, and a second fluid to be processed, i.e., a second fluid, is introduced into between the processing surfaces from a separate path that is independent of the flow path introducing the first fluid and has an opening leading to between the processing surfaces, whereby the first fluid and the second fluid are mixed and stirred between the processing surfaces. Meanwhile, in FIG. 1, a reference character U indicates an upside and a reference character S indicates a downside; however, up and down, front and back and right and left shown therein indicate merely a relative positional relationship and does not indicate an absolute position. In FIG. 2 (A) and FIG. 3(B), reference character R indicates a rotational direction. In FIG. 3(C), reference character C indicates a direction of centrifugal force (a radial direction).

In this apparatus provided with processing surfaces arranged opposite to each other so as to be able to approach to and separate from each other, at least one of which rotates relative to the other, at least two kinds of fluids as fluids to be processed are used, characterized in that at least one fluid thereof contains at least one kind of material to be processed, a thin film fluid is formed by converging the respective fluids between these processing surfaces, and the material to be processed is processed in this thin film fluid. With this apparatus, a plurality of fluids to be processed may be processed as mentioned above; but a single fluid to be processed may be processed as well.

This apparatus is provided with two processing members of a first processing member 10 and a second processing member 20 arranged opposite to each other, characterized in that at least one of these processing members rotates. The surfaces arranged opposite to each other of the respective processing members 10 and 20 are made to be the respective processing surfaces. The first processing member 10 is provided with a first processing surface 1 and the second processing member 20 is provided with a second processing surface 2.

The processing surfaces 1 and 2 are connected to a flow path of the fluid to be processed and constitute part of the flow path of the fluid to be processed. Distance between these processing surfaces 1 and 2 can be changed as appropriate; and thus, the distance thereof is controlled so as to form a minute space usually in the range of 1 mm or less, for example, 0.1 $\mu$m to 50$\mu$m. With this, the fluid to be processed passing through between the processing surfaces 1 and 2 becomes a forced thin film fluid forced by the processing surfaces 1 and 2.

When a plurality of fluids to be processed are processed by using this apparatus, the apparatus is connected to a flow path of the first fluid to be processed whereby forming part of the flow path of the first fluid to be processed; and part of the flow path of the second fluid to be processed other than the first fluid to be processed is formed. In this apparatus, the two paths converge into one, and two fluids to be processed are mixed between the processing surfaces 1 and 2 so that the fluids may be processed by reaction and so on. It is noted here that the term "process(ing)" includes not only the embodiment characterized in that a material to be processed is reacted but also the embodiment characterized in that a material to be processed is only mixed or dispersed without accompanying reaction.

To specifically explain, this apparatus is provided with a first holder 11 for holding the first processing member 10, a second holder 21 for holding the second processing member 20, a surface-approaching pressure imparting mechanism, a rotation drive mechanism, a first introduction part d1, a second introduction part d2, and a fluid pressure imparting mechanism p.

As shown in FIG. 2(A), in this embodiment, the first processing member 10 is a circular body, specifically a disk with a ring form. Similarly, the second processing member 20 is a circular disk. Material of the processing members 10 and 20 is not only metal but also carbon, ceramics, sintered metal, abrasion-resistant steel, sapphire, and other metal subjected to hardening treatment, and rigid material subjected to lining, coating, or plating. In the processing members 10 and 20 of this embodiment, at least part of the first and the second surfaces 1 and 2 arranged opposite to each other is mirror-polished.

Roughness of this mirror polished surface is not particularly limited; but surface roughness Ra is preferably 0.01 $\mu$m to 1.0 $\mu$m, or more preferably 0.03 $\mu$m to 0.3 $\mu$m.

At least one of the holders can rotate relative to the other holder by a rotation drive mechanism such as an electric motor (not shown in drawings). A reference numeral 50 in FIG. 1 indicates a rotary shaft of the rotation drive mechanism; in this embodiment, the first holder 11 attached to this rotary shaft 50 rotates, and thereby the first processing member 10 attached to this first holder 11 rotates relative to the second processing member 20. As a matter of course, the second processing member 20 may be made to rotate, or the both may be made to rotate. Further in this embodiment, the first and second holders 11 and 21 may be fixed, while the first and second processing members 10 and 20 may be made to rotate relative to the first and second holders 11 and 21.

At least any one of the first processing member 10 and the second processing member 20 is able to approach to and separate from at least any other member, thereby the processing surfaces 1 and 2 are able to approach to and separate from each other.

In this embodiment, the second processing member 20 approaches to and separates from the first processing member 10, characterized in that the second processing member 20 is accepted in an accepting part 41 arranged in the second holder 21 so as to be able to rise and set. However, as opposed to the above, the first processing member 10 may approach to and separate from the second processing member 20, or both the processing members 10 and 20 may approach to and separate from each other.

This accepting part 41 is a concave portion for mainly accepting that side of the second processing member 20 opposite to the second processing surface 2, and this concave portion is a groove being formed into a circle, i.e., a ring when viewed in a plane. This accepting part 41 accepts the second processing member 20 with sufficient clearance so that the second processing member 20 may rotate. Meanwhile, the second processing member 20 may be arranged so as to be movable only parallel to the axial direction; alternatively, the second processing member 20 may be made movable, by making this clearance larger, relative to the accepting part 41 so as to make the center line of the processing member 20 inclined, namely unparallel, to the axial direction of the accepting part 41, or movable so as to depart the center line of the processing member 20 and the center line of the accepting part 41 toward the radius direction.

It is preferable that the second processing member 20 be accepted by a floating mechanism so as to be movable in the three dimensional direction, as described above.

The fluids to be processed are introduced into between the processing surfaces 1 and 2 from the first introduction part d1 and the second introduction part d2, the flow paths through which the fluids flow, under the state that pressure is applied thereto by a fluid pressure imparting mechanism p consisting of various pumps, potential energy, and so on. In this embodiment, the first introduction part d1 is a path arranged in the center of the circular, second holder 21, and one end thereof is introduced into between the processing surfaces 1 and 2 from inside the circular, processing members 10 and 20. Through the second introduction part d2, the first fluid to be processed and the second fluid to be processed for reaction are introduced into between the processing surfaces 1 and 2. In this embodiment, the second introduction part d2 is a path arranged inside the second processing member 20, and one end thereof is open at the second processing surface 2. The first fluid to be processed which is pressurized with the fluid pressure imparting mechanism p is introduced from the first introduction part d1 to the space inside the processing members 10 and 20 so as to pass through between the first and processing surfaces 1 and 2 to outside the processing members 10 and 20. From the second introduction part d2, the second fluid to be processed which is pressurized with the fluid pressure imparting mechanism p is provided into between the processing surfaces 1 and 2, whereat this fluid is converged with the first fluid to be processed, and there, various fluid processing such as mixing, stirring, emulsification, dispersion, reaction, deposition, crystallization, and separation are effected, and then the fluid thus processed is discharged from the processing surfaces 1 and 2 to outside the processing members 10 and 20. Meanwhile, an environment outside the processing members 10 and 20 may be made negative pressure by a vacuum pump.

The surface-approaching pressure imparting mechanism mentioned above supplies the processing members with force exerting in the direction of approaching the first processing surface 1 and the second processing surface 2 each other. In this embodiment, the surface-approaching pressure imparting mechanism is arranged in the second holder 21 and biases the second processing member 20 toward the first processing member 10.

The surface-approaching pressure imparting mechanism is a mechanism to generate force (hereinafter, surface-approaching pressure) to press the first processing surface 1 of the first processing member 10 and the second processing surface 2 of the second processing member 20 in the direction to make them approach to each other. The mechanism generates a thin film fluid having minute thickness in a level of nanometer or micrometer by the balance between the surface-approaching pressure and the force to separate the processing surfaces 1 and 2 from each other, i.e., the force such as the fluid pressure. In other words, the distance between the processing surfaces 1 and 2 is kept in a predetermined minute distance by the balance between these forces.

In the embodiment shown in FIG. 1, the surface-approaching pressure imparting mechanism is arranged between the accepting part 41 and the second processing member 20. Specifically, the surface-approaching pressure imparting mechanism is composed of a spring 43 to bias the second processing member 20 toward the first processing member 10 and a biasing-fluid introduction part 44 to introduce a biasing fluid such as air and oil, characterized in that the surface-approaching pressure is provided by the spring 43 and the fluid pressure of the biasing fluid. The surface-approaching pressure may be provided by any one of this spring 43 and the fluid pressure of this biasing fluid; and other forces such as magnetic force and gravitation may also be used. The second processing member 20 recedes from the first processing member 10 thereby making a minute space between the processing surfaces by separating force, caused by viscosity and the pressure of the fluid to be processed applied by the fluid pressure imparting mechanism p, against the bias of this surface-approaching pressure imparting mechanism. By this balance between the surface-approaching pressure and the separating force as mentioned above, the first processing surface 1 and the second processing surface 2 can be set with the precision of a micrometer level; and thus the minute space between the processing surfaces 1 and 2 may be set. The separating force mentioned above includes fluid pressure and viscosity of the fluid to be processed, centrifugal force by rotation of the processing members, negative pressure when negative pressure is applied to the biasing-fluid introduction part 44, and spring force when the spring 43 works as a pulling spring. This surface-approaching pressure imparting mechanism may be arranged also in the first processing member 10, in place of the second processing member 20, or in both the processing members.

To specifically explain the separation force, the second processing member 20 has the second processing surface 2 and a separation controlling surface 23 which is positioned inside the processing surface 2 (namely at the entering side of the fluid to be processed into between the first and second processing surfaces 1 and 2) and next to the second processing surface 2. In this embodiment, the separation controlling surface 23 is an inclined plane, but may be a horizontal plane. The pressure of the fluid to be processed acts to the separation controlling surface 23 to generate force directing to separate the second processing member 20 from the first processing member 10. Therefore, the second processing surface 2 and the separation controlling surface 23 constitute a pressure receiving surface to generate the separation force.

In the example shown in FIG. 1, an approach controlling surface 24 is formed in the second processing member 20. This approach controlling surface 24 is a plane opposite, in the axial direction, to the separation controlling surface 23 (upper plane in FIG. 1) and, by action of pressure applied to the fluid to be processed, generates force of approaching the second processing member 20 toward the first processing member 10.

Meanwhile, the pressure of the fluid to be processed exerted on the second processing surface 2 and the separation controlling surface 23, i.e., the fluid pressure, is understood as force constituting an opening force in a mechanical seal. The ratio (area ratio A1/A2) of a projected area A1 of the approach controlling surface 24 projected on a virtual plane perpendicular to the direction of approaching and separating the processing surfaces 1 and 2, that is, in the direction of rising and setting of the second processing member 20 (axial direction in FIG. 1), to a total area A2 of the projected area of the second processing surface 2 of the second processing member 20 and the separation controlling surface 23 projected on the virtual plane is called as balance ratio K, which is important for control of the opening force. This opening force can be controlled by the pressure of the fluid to be processed, i.e., the fluid pressure, by changing the balance line, i.e., by changing the area A1 of the approach controlling surface 24.

Sliding surface actual surface pressure P, i.e., the fluid pressure out of the surface-approaching pressures, is calculated according to the following equation:

$$P = P1 \times (K - k) + Ps$$

Here, P1 represents the pressure of a fluid to be processed, i.e., the fluid pressure, K represents the balance ratio, k represents an opening force coefficient, and Ps represents a spring and back pressure.

By controlling this balance line to control the sliding surface actual surface pressure P, the space between the processing surfaces 1 and 2 is formed as a desired minute space, thereby forming a fluid film of the fluid to be processed so as to make the processed substance such as a product fine and to effect uniform processing by reaction.

Meanwhile, the approach controlling surface 24 may have a larger area than the separation controlling surface 23, though this is not shown in the drawing.

The fluid to be processed becomes a forced thin film fluid by the processing surfaces 1 and 2 that keep the minute space therebetween, whereby the fluid is forced to move out from the circular, processing surfaces 1 and 2. However, the first processing member 10 is rotating; and thus, the mixed fluid to be processed does not move linearly from inside the circular, processing surfaces 1 and 2 to outside thereof, but does move spirally from the inside to the outside thereof by a resultant vector acting on the fluid to be processed, the vector being composed of a moving vector toward the radius direction of the circle and a moving vector toward the circumferential direction.

Meanwhile, a rotary shaft 50 is not only limited to be placed vertically, but may also be placed horizontally, or at a slant. This is because the fluid to be processed is processed in a minute space between the processing surfaces 1 and 2 so that the influence of gravity can be substantially eliminated. In addition, this surface-approaching pressure imparting mechanism can function as a buffer mechanism of micro-vibration and rotation alignment by concurrent use of the foregoing floating mechanism with which the second processing member 20 may be held displaceably.

In the first and second processing members 10 and 20, the temperature thereof may be controlled by cooling or heating at least any one of them; in FIG. 1, an embodiment having temperature regulating mechanisms J1 and J2 in the first and second processing members 10 and 20 is shown. Alternatively, the temperature may be regulated by cooling or heating the introducing fluid to be processed. These temperatures may be used to separate the processed substance or may be set so as to generate Benard convection or Marangoni convection in the fluid to be processed between the first and second processing surfaces 1 and 2.

As shown in FIG. 2, in the first processing surface 1 of the first processing member 10, a groove-like depression 13 extended toward an outer side from the central part of the first processing member 10, namely in a radius direction, may be formed. The depression 13 may be, as a plane view, curved or spirally extended on the first processing surface 1 as shown in FIG. 2(B), or, though not shown in the drawing, may be extended straight radially, or bent at a right angle, or jogged; and the concave portion may be continuous, intermittent, or branched. In addition, this depression 13 may be formed also on the second processing surface 2, or on both the first and second processing surfaces 1 and 2. By forming the depression 13 as mentioned above, the micro-pump effect can be obtained so that the fluid to be processed may be sucked into between the first and second processing surfaces 1 and 2.

It is preferable that the base edge of this depression 13 reach the inner periphery of the first processing member 10. The front edge of the depression 13 is extended to the direction of the outer periphery of the first processing surface 1; the depth thereof (cross section area) is made gradually shallower (smaller) from the base edge to the front edge.

Between the front edge of the depression 13 and the outer peripheral of the first processing surface 1 is formed the flat plane 16 not having the depression 13.

When an opening d20 of the second introduction part d2 is arranged in the second processing surface 2, the arrangement is done preferably at a position opposite to the flat surface 16 of the first processing surface 1 arranged at a position opposite thereto.

This opening d20 is arranged preferably in the downstream (outside in this case) of the depression 13 of the first processing surface 1. The opening is arranged especially preferably at a position opposite to the flat surface 16 located nearer to the outer diameter than a position where the direction of flow upon introduction by the micro-pump effect is changed to the direction of a spiral and laminar flow formed between the processing surfaces. Specifically, in FIG. 2(B), a distance n from the outermost side of the depression 13 arranged in the first processing surface 1 in the radial direction is preferably about 0.5 mm or more. Especially in the case of separating microparticles from a fluid, it is preferable that mixing of a plurality of fluids to be processed and separation of the microparticles therefrom be effected under the condition of a laminar flow.

This second introduction part d2 may have directionality. For example, as shown in FIG. 3(A), the direction of introduction from the opening d20 of the second processing surface 2 is inclined at a predetermined elevation angle ($\theta1$) relative to the second processing surface 2. The elevation angle ($\theta1$) is set at more than 0° and less than 90°, and when the reaction speed is high, the angle ($\theta1$) is preferably set in the range of 1° to 45°.

In addition, as shown in FIG. 3(B), introduction from the opening d20 of the second processing surface 2 has directionality in a plane along the second processing surface 2. The direction of introduction of this second fluid is in the outward direction departing from the center in a radial component of the processing surface and in the forward direction in a rotation component of the fluid between the rotating processing surfaces. In other words, a predetermined angle ($\theta2$) exists facing the rotation direction R from a reference line g, which is the line to the outward direction and in the radial direction passing through the opening d20. This angle ($\theta2$) is also set preferably at more than 0° and less than 90°.

This angle ($\theta2$) can vary depending on various conditions such as the type of fluid, the reaction speed, viscosity, and the rotation speed of the processing surface. In addition, it is also possible not to give the directionality to the second introduction part d2 at all.

In the embodiment shown in FIG. 1, kinds of the fluid to be processed and numbers of the flow path thereof are set two respectively; but they may be one, or three or more. In the embodiment shown in FIG. 1, the second fluid is introduced into between the processing surfaces 1 and 2 from the introduction part d2; but this introduction part may be arranged in the first processing member 10 or in both. Alternatively, a plurality of introduction parts may be arranged relative to one fluid to be processed. The opening for introduction arranged in each processing member is not particularly restricted in its form, size, and number; and these may be changed as appropriate. The opening for introduction may be arranged just before the first and second processing surfaces 1 and 2 or in the side of further upstream thereof.

Meanwhile, because it is good enough only if the reaction could be effected between the processing surfaces 1 and 2, as opposed to the foregoing method, a method characterized in that the second fluid is introduced from the first introduction part d1 and a solution containing the first fluid is introduced from the second introduction part d2 may also be used. That is, the expression "first" or "second" for each fluid has a meaning for merely discriminating an nth fluid among a plurality of the fluids present; and therefore, a third or more fluids can also exist.

In the above-mentioned apparatus, a treatment such as separation/precipitation and crystallization is effected while the fluids are being mixed forcibly and uniformly between the processing surfaces 1 and 2 which are disposed in a position they are faced with each other so as to be able to approach to and separate from each other, at least one of which rotates relative to the other, as shown in FIG. 1. Particle diameter and monodispersity of the treated substance to be processed can be controlled by appropriately controlling rotation speed of the processing members 10 and 20, distance between the processing surfaces 1 and 2, concentration of raw materials in the fluids to be processed, kind of solvents in the fluids to be processed, and so forth.

Hereunder, specific embodiments as to the method for generating fine bubbles by using the above-mentioned apparatus will be explained.

In the apparatus mentioned above, fine bubbles are generated by mixing the liquid which is the fluid to be processed with the gas which is the fluid to be processed in the thin film fluid formed between the processing surfaces which are disposed in a position they are faced with each other so as to be able to approach to and separate from each other, at least one of which rotates relative to the other.

In the apparatus shown in FIG. 1 of the present invention, generation of the fine bubbles takes place by forcibly and uniformly mixing the liquid with the gas, which are the fluids to be processed, between the processing surfaces which are disposed in a position so as to be able to approach to and separate from each other, at least one of which rotates relative to the other.

At first, the liquid is introduced as the first fluid from the first introduction part d1, which is one flow path, into between the processing surfaces 1 and 2 which are disposed in a position they are faced with each other so as to be able to approach to and separate from each other, at least one of which rotates relative to the other, thereby forming between the processing surfaces a first fluid film which is a thin film fluid formed of the first fluid.

Then, the gas is introduced as the second fluid directly into the first fluid film formed between the processing surfaces 1 and 2 from the second introduction part d2 which is another flow path.

As mentioned above, the first fluid and the second fluid are mixed between the processing surfaces 1 and 2, characterized in that the distance therebetween is fixed by the pressure balance between the supply pressure of the fluids to be processed and the pressure applied between the rotating processing surfaces, whereby the fine bubbles can be generated. More specifically, the gas as the second fluid which is introduced into the thin film fluid in the liquid as the first fluid formed between the processing surfaces 1 and 2 is made to have the thickness of 0.1 $\mu$m to 1 mm which the thickness is the equivalent of minute distance between the processing surfaces 1 and 2 at that point. Moreover, by rotating the processing surfaces relative to each other, the gas can be instantaneously mixed and spread into the liquid so that the gas introduced between the processing surfaces 1 and 2 can easily become fine bubbles. The size or the diameter of the bubbles can be easily changed by the rotation number of the processing surfaces, the temperature of the fluid to be processed being introduced between the processing surfaces 1 and 2, and the kinds of the liquid and the gas used as the fluids to be processed.

Meanwhile, because it is good enough only if the reaction could be effected between the processing surfaces 1 and 2, as opposed to the foregoing method, a method characterized in that the second fluid is introduced from the first introduction part d1 and a solution containing the first fluid is introduced from the second introduction part d2 may also be used. That is, the expression "first" or "second" for each fluid has a meaning for merely discriminating an nth fluid among a plurality of the fluids present; and therefore, a third or more fluids can also exist.

A combination of the first fluid and the second fluid is not particularly restricted, and any combination may be used so far as there are a fluid which contains the liquid and a fluid which contains the gas.

The gas used in the present invention is not particularly restricted. In all substances, any gas so far as to exist as a gas and be introduced as a gas into between the processing surfaces 1 and 2 under certain environmental conditions (pressure, temperature, and the like) may be used. Illustrative example of the gas thereof includes hydrogen, nitrogen, oxygen, carbon oxide (such as carbon monoxide and carbon dioxide), sulfur dioxide, hydrogen chloride, chlorine, nitrogen oxide (such as nitrogen monoxide and nitrogen dioxide), acetylene, argon, and helium. These gases may be used solely or as a mixture of a plurality of them. In addition, these may contain a solid or a liquid to the degree not causing an influence to the present invention. Meanwhile, these gases may be introduced simultaneously with a liquid that will be mentioned later into between the processing surfaces 1 and 2 from one introduction part.

The liquid used in the present invention is not particularly restricted. In all substances, any liquid so far as to exist as a liquid and be introduced as a liquid into between the processing surfaces 1 and 2 under certain environmental conditions (pressure, temperature, and the like) may be used. Illustrative example of the liquid includes water and organic solvent, or a mixed solvent containing a plurality of them. Illustrative example of the water includes tap water, ion-exchanged water, pure water, ultrapure water, and RO water. Illustrative example of the organic solvent includes an alcohol compound solvent, an amide compound solvent, a ketone compound solvent, an ether compound solvent, an aromatic compound solvent, carbon disulfide, an aliphatic compound solvent, a nitrile compound solvent, a sulfoxide compound solvent, a halogen compound solvent, an ester compound solvent, an ionic liquid, a carboxylic acid compound, and a sulfonic acid compound. These solvents may be used solely or as a mixture of a plurality of them. In addition, these liquid may contain a solid such as sodium hydroxide or a liquid such as hydrogen chloride to the degree not causing an influence to the present invention. Meanwhile, these liquids may be introduced simultaneously with a gas that is mentioned above into between the processing surfaces 1 and 2 from one introduction part.

In the present invention, fine bubbles can be generated by mixing and spreading the gas and the liquid as mentioned above between the processing surfaces 1 and 2, in which the diameter of the gas bubbles in the present invention is not particularly restricted. The diameter thereof is preferably less than 100 $\mu$m, or more preferably less than 10 $\mu$m. The diameter can be appropriately changed in accordance with ascending time and stability of the intended fine bubbles, kind of the gas-liquid reaction that will be mentioned later, and the like. Note that, the measurement method of the fine bubble diameter is not particularly restricted. The method includes, such as for example, the particle diameter measurement and the microscopic observation of the fine bubbles in the dispersion solution to be discharged after mixing and spreading treatment of the foregoing gas and liquid between the processing surfaces 1 and 2.

In the present invention, by using the method for generating fine bubbles, the gas-liquid reaction to react the gas mentioned above with the reactant that will be mentioned later can be carried out easily by mixing the fluids to be processed in the thin film fluid formed between the processing surfaces 1 and 2. The gas-liquid reaction may include the case that the gas and the reactant are reacted by contacting the fluids to be processed just after the fluids to be processed are introduced into between the processing surfaces 1 and 2. In addition, in the present invention, the gas-liquid reaction can be carried out easily by contacting the fine bubbles generated by the method for generating fine bubbles in the thin film fluid formed between the processing surfaces 1 and 2 as mentioned above with the reactant that will be mentioned later in between the processing surfaces 1 and 2. In this occasion, the reactant shall be contained in at least any one of the fluids to be processed, i.e., in any one of the liquid, the gas, and the third fluid other than the said liquid and the said gas.

Furthermore, these gas-liquid reactions can be used to produce a product having a balloon structure. The product having a balloon structure is not particularly restricted, illustrative example of ceramics includes a silicon compound or the microparticles thereof, hollow resin emulsion and resin microparticles, and further, particle having the hollow structure of various compounds such as a pigment a metal, an oxide, a hydroxide, a carbide, a salt, and organic compound.

The reactant in the present invention is not particularly restricted. Kinds of the reactant and the gas can be appropriately selected in accordance with the intended gas-liquid reaction to be carried out. Illustrative example of the reactant used to react with the foregoing gas bubbles includes living organisms and protein such as a germ and a virus, various inorganic and/or organic substances (including a medical supply and a pigment), a metal, a non-metal, and a compound of a metal or a non-metal (including an inorganic salt, an organic salt, an oxide, a hydroxide, a nitride, and a boride). These reactants may be used in the state of a solution in which they are dissolved or molecular-dispersed in the foregoing liquid, or preferably in the state of a mixture as the solid by itself, such as for example, in the state of a dispersion solution of microparticles thereof. Alternatively, the reactant may be contained in the gas as mentioned above or in the third fluid that will be mentioned later. In the case that the reactant is contained in the gas, the reactivity of the gas to the reactant may be used whether it is active or inactive.

In the present invention, a dispersing agent such as a block copolymer, a polymer, and a surfactant may be contained in any of the foregoing gas and liquid or both to the degree not causing an influence to the present invention. Alternatively, the dispersing agent may be contained in the third fluid other than the fluid which contains the gas and the fluid which contains the liquid.

As mentioned above, the apparatus may be provided with the third introduction part d3, in addition to the first introduction part d1 and the second introduction part d2; and in this case, for example, from each introduction parts, the foregoing liquid as the first fluid, the foregoing gas as the second fluid, and a fluid which contains the reactant as the third fluid may be introduced separately into the processing apparatus to carry out the gas-liquid reaction. By so doing, the kind, the concentration, and the pressure of the each fluid can be controlled separately so that the conditions of generating fine bubbles, diameter of the fine bubbles and stability thereof, reaction condition of the generated fine bubbles with the reactant, and so forth can be controlled more precisely. Meanwhile, a combination of the fluids to be processed (first to third fluids) that are introduced into each of the introduction parts may be set arbitrarily. The same is applied if the fourth or more introduction parts are arranged; and by so doing, fluids to be introduced into the apparatus may be subdivided. In this case, the reactant may be contained at least in the third fluid, at least in either one of the first fluid or the second fluid, or neither in the first fluid nor the second fluid.

In addition, temperatures of the fluids to be processed such as the first fluid and the second fluid may be controlled; and temperature difference among the first fluid, the second fluid, and so on (namely, temperature difference among each of the supplied fluids to be processed) may be controlled either. To control temperature and temperature difference of each of the supplied fluids to be processed, a mechanism with which temperature of each of the fluids to be processed is measured (temperature of the fluid before introduction to the apparatus, or in more detail, just before introduction into between the processing surfaces 1 and 2) so that each of the fluids to be processed that is introduced into between the processing surfaces 1 and 2 may be heated or cooled may be installed.


Examples


Hereinafter, the present invention will be explained in more detail by Examples; but the present invention is not limited only to these Examples.

In Examples 1 to 4, an aqueous sodium hydroxide solution (liquid) was mixed with a carbonate gas (carbon dioxide gas) in the thin film fluid formed between the processing surfaces 1 and 2 by using the apparatus for generating fine bubbles based on the same principle as the apparatus in Patent Document 5 as shown in FIG. 1, whereby carrying out the gas-liquid reaction to obtain sodium hydrogen carbonate by reacting sodium hydroxide with carbon dioxide. In Example 5 to 8, an aqueous sodium dodecylsulfate solution (hereinafter, this is referred to as "aqueous SDS solution") was mixed with a nitrogen gas in the thin film fluid formed between the processing surfaces 1 and 2 by using the apparatus for generating fine bubbles based on the same principle as the apparatus in Patent Document 5 as shown in FIG. 1, whereby generating fine bubbles.

It is to be noted here that the term "from the center" in the following Examples means "from the first introduction part d1" of the processing apparatus shown in FIG. 1; the first fluid means the first fluid to be processed that is introduced through the first introduction part d1 of the processing apparatus as described before; and the second fluid means the second fluid to be processed that is introduced through the second introduction part d2 of the processing apparatus shown in FIG. 1, as described before.

Examples 1 to 4

While an aqueous sodium hydroxide solution was introduced as the liquid of the first fluid from the center with the supply pressure of 0.30 MPaG and with the rotation speed shown in Table 1, a carbonate gas (carbon dioxide gas) was introduced as the second fluid gas into between the processing surfaces 1 and 2 at 25°C, and the first fluid and the second fluid were mixed in the thin film fluid. The supply temperatures of the first and second fluids were measured just before introduction of the first fluid and the second fluid into the processing apparatus (in other words, just before introduction of the respective fluids into between the processing surfaces 1 and 2). The solution containing sodium hydrogen carbonate was discharged from the processing surfaces 1 and 2. The solution containing sodium hydrogen carbonate was evaporated to dryness by a rotary evaporator, and then, the sodium hydrogen carbonate was thermally decomposed to sodium carbonate. Thereafter, amount of the produced sodium carbonate was calculated by the Warder method, and then, amount of the sodium hydrogen carbonate produced by the gas-liquid reaction was calculated from the calculated sodium carbonate. In Table 1, the processing conditions are shown together with the amount of the produced sodium hydrogen carbonate as the yield (% by weight) of the reaction treatment. Meanwhile, it was confirmed by eye observation that fine gas bubbles of carbon dioxide was contained in the solution containing sodium hydrogen carbonate discharged from the processing surfaces 1 and 2.

[Table 1]

| Example | Rotation speed | First fluid | | | Second fluid | | Amount of produced sodium hydrogen carbonate |
|---|---|---|---|---|---|---|---|
| | | Kind | Introduction temp. | Introduction rate | Kind | Introduction rate | Yield |
| | [rpm] | | [°C] | [mL/minute] | | [mL/minute] | [% by weight] |
| 1 | 1500 | Aqueous sodium hydroxide solution (0.1 mol/L) | 25 | 50 | Carbon dioxide gas | 200 | 96 |
| 2 | 1500 | | 25 | 100 | | 400 | 91 |
| 3 | 3000 | | 5 | 100 | | 400 | 97 |
| 4 | 3000 | | 25 | 500 | | 1500 | 94 |

Comparative Example

As Comparative Example to Example 2, while stirring 100 mL of an aqueous sodium hydroxide, the concentration thereof being 0.1 mol/L, by a magnetic stirrer in a beaker at 25°C, carbon dioxide gas was charged thereinto at the rate of 400 mL/minute for 1 minute at 25°C for mixing. The solution containing sodium hydrogen carbonate after mixing with carbon dioxide was dried to dryness by a rotary evaporator, and then, the sodium hydrogen carbonate was thermally decomposed to sodium carbonate. Thereafter, amount of the produced sodium carbonate was calculated by the Warder method; and then, amount of the sodium hydrogen carbonate produced by the gas-liquid reaction was calculated from the calculated sodium carbonate. As a result, the production yield of sodium hydrogen carbonate was 46% by weight.

From Table 1, it was found that the gas-liquid reaction could be executed more efficiently than the conventional method by carrying out the gas-liquid reaction between the processing surfaces 1 and 2 by using the apparatus for generating fine bubbles according to the present invention. From the above results, it is assumed that the fine bubbles of the carbon dioxide generated between the processing surfaces 1 and 2 can be contacted with the reactant efficiently between the processing surfaces 1 and 2 by using the apparatus for generating fine bubbles according to the present invention.

Examples 5 to 8

While an aqueous SDS solution was introduced as the liquid of the first fluid from the center with the supply pressure of 0.30 MPaG and with the rotation speed shown in Table 2, a nitrogen gas was introduced as the second fluid gas into between the processing surfaces 1 and 2 at 25°C, and the first fluid and the second fluid were mixed in the thin film fluid. The supply temperatures of the first and second fluids were measured just before introduction of the first fluid and the second fluid into the processing apparatus (in other words, just before introduction of the respective fluids into between the processing surfaces 1 and 2). The solution containing fine bubbles of nitrogen gas was discharged from the processing surfaces 1 and 2. The solution containing the discharged nitrogen gas was observed with a light microscope to confirm the particle diameter of the bubbles of the nitrogen gas.

[Table 2]

| Example | Rotation speed | First fluid | | | Second fluid | | Particle diameter of nitrogen gas bubble |
| | | Kind | Introduction temp. | Introduction rate | Kind | Introduction rate | [μm] |
| | [rpm] | | [°C] | [mL/minute] | | [mL/minute] | |
| 5 | 500 | Aqueous SDS solution (0.5% by weight) | 25 | 50 | Nitrogen | 50 | 30-480 |
| 6 | 1000 | | 25 | 200 | | 100 | 20-300 |
| 7 | 1000 | | 25 | 200 | | 200 | 0.4-150 |
| 8 | 3000 | | 25 | 850 | | 2300 | 0.1-30 |

From Table 2, it was found that bubbles of the nitrogen gas could be readily generated between the processing surfaces 1 and 2 by using the apparatus for generating fine bubbles according to the present invention. Furthermore, because the size of the bubbles is 1 mm or less, it can be confirmed that fine bubbles are formed between the processing surfaces 1 and 2. In addition, the reaction effect of the gas-liquid reaction using the fine bubbles is expected by efficiently contacting the generated fine bubbles with the reactant in between the processing surfaces 1 and 2, so that the generated fine bubbles have a large surface area (interfacial area).

1      first processing surface
2      second processing surface
10     first processing member
11     first holder
20     second processing member
21     second holder
d1     first introduction part
d2     second introduction part
d20    opening

**Claims**

1.  An apparatus for generating fine bubbles, **characterized in that** the apparatus is provided with a plurality of processing members which are disposed in a position they are faced with each other so as to be able to approach to and separate from each other, at least one of which rotates relative to the other, a plurality of processing surfaces which are disposed in a position they are faced each other in the respective plurality of processing members, and at least two independent flow paths leading to the said plurality of processing surfaces, whereby introducing a fluid to be processed into the plurality of processing surfaces through the at least two independent flow paths to carry out fluid processing, **characterized by** of the at least two independent flow paths, introducing a liquid which is one fluid to be processed through one flow path, while introducing a gas which is another fluid to be processed through another flow path, whereby generating bubbles between the plurality of processing surfaces.

2. A method for generating fine bubbles, **characterized in that** fine bubbles are generated by mixing a liquid and a gas as fluids to be processed in a plurality of processing members which are disposed in a position they are faced with each other so as to be able to approach to and separate from each other , at least one of which rotates relative to the other, and in between a plurality of processing surfaces which are disposed in a position they are faced with each other in the each of the plurality of processing members; **characterized in that**, any one of the liquid and the gas passes through between the plurality of processing surfaces while forming a thin film fluid, an another introduction path independent of the flow path for the any one of the liquid and the gas is provided, at least any one of the plurality of processing surfaces is arranged with one opening which leads to this introduction path, any other one of the liquid and the gas is introduced between the processing surfaces through the opening, whereby mixing the liquid with the gas in the thin film fluid to generate fine bubbles.

3. A method for gas-liquid reaction, **characterized in that** the method for generating fine bubbles according to the second claim is used, **characterized in that** at least one reactant is contained in at least any one of the fluids to be processed, i.e., in at least any one of the liquid, the gas, and one fluid to be processed other than the said liquid and the said gas, **characterized in that** the fluids to be processed are mixed in the thin fluid thereby reacting the gas with the reactant.

4. A method for a gas-liquid reaction, **characterized by** using the method for generating fine bubbles according to the second claim, the fine bubbles generated in the thin film fluid formed between the plurality of processing surfaces is contacted in the processing surfaces with a reactant contained in at least any one of the fluids to be processed, i.e., in at least any one of the liquid, the gas, and one fluid to be processed other than the said liquid and the said gas, these being introduced into between the plurality of the processing surfaces to generate the fine bubbles, whereby reacting the fine gas bubbles with the reactant.

Figure 1

Figure 2

（A）

R

13

1

（B）

13

16

1

d20

O

n

Figure 3

（A）

（B）

**INTERNATIONAL SEARCH REPORT**

| International application No. |
| --- |
| PCT/JP2011/062297 |

A. CLASSIFICATION OF SUBJECT MATTER
*B01F3/04*(2006.01)i, *B01F5/22*(2006.01)i, *B01F7/26*(2006.01)i, *B01J10/02*(2006.01)i

According to International Patent Classification (IPC) or to both national classification and IPC

B. FIELDS SEARCHED

Minimum documentation searched (classification system followed by classification symbols)
B01F3/04, B01F5/22, B01F7/26, B01J10/02

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2008-229574 A (Q.P. Corp.),<br>02 October 2008 (02.10.2008),<br>paragraphs [0010] to [0014]; fig. 1 to 3<br>(Family: none) | 1-4 |
| Y | JP 2011-068673 A (M Technique Co., Ltd.),<br>07 April 2011 (07.04.2011),<br>paragraphs [0011], [0361] to [0366];<br>fig. 1 to 29<br>(Family: none) | 1-4 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>09 August, 2011 (09.08.11) | Date of mailing of the international search report<br>23 August, 2011 (23.08.11) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/062297

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2002-537095 A  (Protensive Ltd.),<br>05 November 2002 (05.11.2002),<br>entire text; all drawings<br>& US 6858189 B1          & GB 9903474 A<br>& EP 1152822 A           & DE 60000440 D<br>& AU 2559700 A           & AT 223751 T<br>& DK 1152823 T           & ES 2182781 T | 1-4 |
| A | JP 58-104623 A  (John Edward Porter),<br>22 June 1983 (22.06.1983),<br>entire text; all drawings<br>& US 4549998 A           & EP 80311 A2<br>& DE 3268599 D | 1-4 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006142300 A
- JP 2011078858 A
- JP 2009101299 A
- JP 2004049957 A
- WO 20098394 A